# EUROPEAN PATENT SPECIFICATION

(11) **EP 3 146 832 B1**
(45) Date of publication and mention of the grant of the patent: **05.05.2021**
(21) Application number: 16188921.7
(22) Date of filing: 15.09.2016
(51) Int. Cl.: A01D 41/14, A01D 75/00, A01D 69/03, A01D 41/16

(54) **CROP HARVESTING MACHINE WITH A HEADER SEPARABLE FROM A TRACTOR**
GETREIDEERNTEMASCHINE MIT VON EINEM TRAKTOR TRENNBAREN ERNTEGERÄT
MACHINE DE RÉCOLTES AVEC UNE TABLE DE COUPE AMOVIBLE DU TRACTEUR

(30) Priority: 24.09.2015 US 201514863992; 24.09.2015 CA 2904912
(43) Date of publication of application: 29.03.2017
(73) Proprietor: MACDON INDUSTRIES LTD., Winnipeg, Manitoba R3J 3S3 (CA)
(72) Inventor: Enns, John Edward, East St. Paul, Manitoba R2R 0Y9 (CA); Jabal, Arvinder Singh, Winnipeg, Manitoba R2R 0Y9 (CA)
(74) Representative: Jostarndt Patentanwalts-AG

(56) References cited:
- EP-A1- 1 290 935
- EP-A1- 2 656 712
- WO-A1-2015/116892
- US-A1- 2006 201 732
- US-A1- 2007 199 293

## Description

This invention relates to a crop harvesting machine including a header and a tractor where the header is separable from the tractor. The tractor may be a swather tractor which simply caries the header to form a swath or may be a combine harvester which also carries out a separation process.

### BACKGROUND OF THE INVENTION

Reference is made to the following patents and applications by the same assignee, the disclosure of each of which provides further details which may be used in the machines disclosed herein:
US Patent 8,245,489 (Talbot) issued August 21 2012 which discloses a combine harvester where the header is carried on gauge wheels.
US Patent 8,225,903 (Dunn) issued July 24 2012 which discloses a tractor of the type suitable for use herein where the tractor includes a suspension system.
US Patent 8,020,648 (Otto) issued September 20 2011 which discloses a tractor of the type suitable for use herein where the tractor has a rear suspension.
US Patent 7,958,706 (Remillard) issued June 14 2011 which discloses a tractor of the type suitable for use herein where the tractor includes a reel speed control.
US Patent 7,918,076 (Talbot) issued April 5 2011 which discloses a header of the type suitable for use herein where the header has three sections which include a balance of lifting forces across the three sections.
US Patent 7,721,830 (Dunn) issued May 25 2010 which discloses a tractor of the type suitable for use herein with steering control.
US Patent 7,373,769 (Talbot) issued May 20 2008 which discloses a header with a wear shield under the cutter bar.
US Patent 7,347,277 (Enns) issued March 25 2008 which discloses a header with a self-contained transport system.
US Patent 7,472,533 (Talbot) issued Jan 6 2009 which discloses a header with a cutter bar and draper with a seal between the draper and cutter bar.
US Patent 7,159,687 (Dunn) issued Jan 9 2007 which discloses a tractor of the type suitable for use herein where the tractor carries a header across a front face thereof for movement across the field for forming a swath from a standing crop where the tractor can be reversed in direction for transport.
US Patent 7,197,865 (Enns) issued April 3 2007 which discloses a header for mounting across a front face of the tractor above for movement across the field for forming a swath from a standing crop where the header includes ground wheels movable from field positions to a transport position where the header can be turned through 90 degrees and pulled by the tractor in a longitudinal direction behind the tractor

EP 1290935 A1 discloses a specific type of tractor and header combination where the header is mounted on a front mounting assembly for pivotal movement relative to the tractor according to the preamble of claim 1.

A machine of this type generally includes a crop header for cutting a standing crop including a header frame, a cutter extending across a front cutter bar of the header frame for cutting the crop, and a transport system operable to transport the crop to a central discharge opening of the header so as to form a swath.

Typically the cutter is a sickle knife of the type described in the above patents but in some cases other types of cutter can be used. In many cases the transport device is a draper but other types of transport including augers can be used.

The machine further includes a tractor or other vehicle for carrying the header including a tractor frame having a first end and a second end, ground wheels for supporting the tractor in movement across the ground including a pair of transversely spaced first wheels at the first end, a mounting assembly at the first end of the tractor frame for supporting the header, and a lift arrangement for raising and lowering the mounting assembly.

### SUMMARY OF THE INVENTION

According to the invention there is provided a crop harvesting machine comprising:
a tractor having longitudinally opposed first and second ends;
a driver cabin on the tractor;
ground wheels rotatably supported on the tractor frame for movement of the tractor in a working direction across the ground which carries a crop to be harvested;
an engine and hydraulic pump mounted on the tractor for providing a pressurized fluid output;
a header having an elongate support structure arranged across a width of the tractor extending from one end of the header to an opposed end of the header;
the header including a cutter system extending across a width of the header for cutting a standing crop as the header is moved over the ground;
the header including a hydraulic header drive system for driving at least the cutter system;
a mounting assembly carrying the header at a position forward of the first end of the tractor so as to support the header in movement over the ground as the tractor is moved in the working direction;
the mounting assembly mounting the header on the tractor for movements of the header relative to the tractor at least in a first direction upwardly and downwardly and in a second direction of twisting movement where said one end of the header is movable upwardly and downward relative to said opposed end;
the mounting assembly being releasable for disconnection of the header from the tractor;
a flexible conduit assembly having one or more conduits having an extent from the tractor to the header for connecting the pressurized fluid from the tractor to the hydraulic header drive system;
and a conduit support member for supporting the conduit assembly in at least part of the extent from the tractor to the header wherein the conduit support member is connected at one end to one of the tractor and the header and being connected by a releasable coupling at the other end to the other of the tractor and the header;
the conduit support member including articulation components providing articulation of said one end relative to the other end so as to accommodate said movements of the header relative to the tractor;
the conduit support member including support components providing support to the conduit assembly to prevent collapse thereof when said other end is disconnected from said other of the tractor and the header for disconnection of the header.

The tractor is typically a swather tractor where the header is a swather header for collecting the cut crop or discharge into a swath behind the tractor. However the same arrangement can also be used on other constructions including a combine harvester.

In general therefore the arrangement as described in more detail hereinafter provides a support arm attached to the header which is arranged to carry the heavy hydraulic hoses which are connected to the tractor for supplying the drive fluid to the hydraulic system of the header. Support arm is articulated so as to accommodate the up-and-down and twisting movement of the header relative to the tractor during harvesting action. The support arm is attached at the rear to the tractor preferably at the wheel strut by a releasable ball joint coupling. From the coupling at the wheel strut, there is a free portion of the hydraulic hoses which extends to the manifold or individual couplers at the tractor where the ends of the hoses are attached to manually graspable handle portions which can be lifted away and the attached to a bracket on the support arm.

In some cases the conduit assembly includes a manifold for disconnection of ends of a plurality of conduits of the conduit assembly but the arm design herein could also work using individual couplers in place of the multi-couplers or manifold. Individual couplers would be cheaper but not as quick to connect and also would require a different storage method when uncoupled.

Preferably the conduit assembly includes a portion of the plurality of conduits extending freely beyond the releasable coupling and the conduit support member includes at least one bracket for supporting the free ends of the conduits when disconnected.

In some cases the manifold includes at least two components and there are provided at least two separate brackets at spaced positons on the conduit support member each for a receiving a respective one of the components. However it is not required that there be two multi-couplers on the arm. This could be done with one very large one but two smaller couplers are more convenient and cost effective.

Preferably each of the components includes a hand graspable handle member and each of the brackets is arranged to receive the hand graspable handle member looped or hooked thereon for example using a transverse bar where the bracket defines a slot into which the bar engages.

Preferably the releasable coupling comprises a ball joint which allows swivelling of the releasable end and has a connection which allows the release of the coupling.

Preferably the articulation components provide pivot members pivotal about two orthogonal axes, typically an upright axis and a transverse axis.

Preferably the articulation component provides a mounting base, a first portion of the conduit support member extending from the mounting base and pivotal relative thereto about a first transverse axis and a second portion connected at a distal end of the first portion and pivotal relative thereto about an axis parallel to the first axis. The support components then resist the movement about the pivot so as to hold the portions in place against collapse about the pivot axes so that the support components can comprise damper members such as gas springs or wire springs which provide a resistance to collapse.

Preferably the conduit support member comprises a channel defined by a base and side walls within which the conduit/s sits.

Preferably the conduit support member is arched.

Preferably the conduit support member is connected between a main support beam of the header and a front wheel support strut of the tractor.

Preferably the conduit support member is permanently connected at said one end to the header and there is provided a releasable coupling on the header for receiving and locating the other end of the conduit support member when disconnected from the tractor.

In some cases and to obtain the best advantage the tractor can be drivable in both directions with the first end forward and with the second end forward with the linkage arranged such that the header is towed behind the tractor as it moves in a direction opposite to the working direction with the first end at the rear. This allows a simple connection of the header to the tractor in the transport position since the header remains at the same end when working and when towed. However it is also possible to keep the header at the same end by pushing the header forward in the transport position. In this case it is likely that a support wheel for the outboard or forward end of the header will be steered to keep the header aligned with the front of the tractor.

In order to meet modern transport requirements over roads, it is preferable that the header is towed at a position located between a path of the first wheels as the tractor moves in a straight line, where this be towed or pushed. Of course when towed, the header will follow the tractor in the form of a trailer so that it will follow to one side as the tractor turns.

Typically the present arrangement as defined above is concerned with sickle headers where the crop transport system is a draper since such headers can be as much as 45 feet (13,7 m)
in length. In this case the header should be propelled along its length since any offset or angle will take it to an operating width greater than that allowed for road use. However the present invention is not limited to headers of such a length so that smaller headers may tolerate other angles and orientations of the header relative to the tractor.

Preferably the mounting system includes a lift system for up and down movement and a spring float system connecting the header to the lift system so as to allow up and down and floating movement of the header relative to the tractor. Where the linkage remains in place during the working operation, the linkage is thus preferably arranged and connected such that in the working position the linkage allows the up and down movement of the header and the floating movement of the header relative to the tractor. For this purpose, one preferred arrangement for effecting this action is to connect end of the linkage to the header by a connector member at the header which allows limited side to side movement of the end of the linkage and limited twisting movement of the end of the linkage about an axis parallel to the working direction.

In a preferred arrangement, the tractor is of the conventional type including an engine mounted on the tractor frame; at least one hydraulic pump driven by the engine for generating a source of hydraulic fluid under pressure for driving components of the tractor and components of the header when attached to the tractor; two driven wheels of the tractor mounted at the first end of the tractor; two non-driven castor wheels of the tractor mounted at the second end of the tractor and a cab mounted on the tractor frame at the first end. This is the type of tractor conventional used as a swather. However other constructions can be used.

In such conventional swather tractors there is provided an operator's seat and control assembly arranged for controlling driving movement of the tractor in both a first end forward position and in a second end forward position, the control assembly including a steering control and a speed control; wherein each of the driven wheels including a respective drive motor driven by hydraulic fluid from the at least one hydraulic pump; wherein the speed control is arranged to control a rate of supply of hydraulic fluid from the at least one hydraulic pump to the respective drive motor to control a common speed of rotation of the driven wheels and thus a speed of movement of the tractor; and wherein the steering control is arranged to control a differential in rate of supply of hydraulic fluid from the at least one hydraulic pump to the respective drive motor to control a relative speed of rotation of the driven wheels and thus a turning direction of the tractor.

Where the tractor is bi-directional, the tractor preferably includes a cab with an operator seat within the cab and wherein the operator seat is rotatable for driving the tractor in both directions with the first end forward and with the second end forward.

### BRIEF DESCRIPTION OF THE DRAWINGS

One embodiment of the invention will now be described in conjunction with the accompanying drawings in which:
Figure 1 is a schematic top plan view partly in phantom and partly broken away showing a crop harvesting machine in a field operating position and including a hose management device according to the present invention.
Figure 2 is a top plan view similar to that of Figure 1 showing the machine in the towing position with the hose management system in stored position.
Figure 3 is an isometric view of the machine in the position of Figure 1.
Figure 4 is a side elevational view of the header in the position of Figure 2 and showing the hose management device in the stored position.

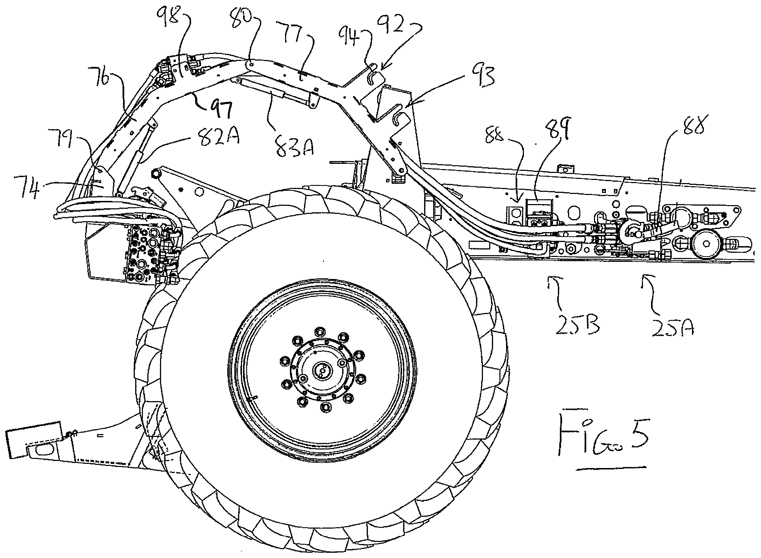

Figure 5 is a side elevational view of the header in the position of Figure 1 and showing the hose management device in the connected position.

In the drawings like characters of reference indicate corresponding parts in the different figures.

### DETAILED DESCRIPTION

A swather tractor generally indicated at 10 includes a frame 11 which is carried on a first pair of driven ground wheels 12 and 13 and on a second pair of non-driven castor wheels 14 and 15. The driven wheels 12 and 13 are mounted on suitable supports 16 which support the ground wheels from the frame 11. The driven ground wheels 12 and 13 are each driven by a hydraulic motor 17 carried on the support 16 which receives hydraulic fluid under pressure from a supply line and drives the ground wheel at a rate of rotation dependent upon the rate of flow of the hydraulic fluid.

The wheels 14 and 15 are mounted on conventional castors 18 which swivel about a castor pin 19. The ground wheels 14 and 15 are non-driven and are simply mounted in a supporting bracket 20 which can pivot around the castor pin 19 so that the castor wheels follow the movement of the vehicle as controlled by the driven wheels 12 and 13. Thus the speed of the vehicle over the ground is controlled by the rate of rotation of the wheels 12 and 13 and steering is controlled by a differential in speed between the wheels 12 and 13.

The frame is shown only schematically since this can vary widely in accordance with requirements as is well known to a person skilled in this art. At the driven end 11A of the frame is mounted suitable supports 21 and 22 for carrying a header 23. Again these elements are well known to persons skilled in this art and various different designs can be used. Thus the support elements 21, 22 on the header carried thereby are shown only schematically. Various different types of headers can be used including disc type cutters or sickle knife cutters. The width of the header can vary considerably depending upon the type of crop and the cutting system employed. The header is preferably carried on the tractor rather than on separate supports and the tractor includes the mounting system 21, 22 which is operable to raise and lower the header on the tractor between different working positions and between working positions and a raised position cleared from the ground for moving the header over the ground when not in working position.

The tractor includes an engine 24 carried on the frame 11 adjacent a second end 11B of the frame. The engine is arranged to drive a series of pumps 25, 26 and 27 for generating pressurized hydraulic fluid for driving the various components of the tractor as described hereinafter. Separate pumps can be used as shown or single pump can be used with the hydraulic fluid under pressure generated thereby being separated into separate controlled fluid paths for operating the various components. The pumps communicate with the manifolds 25A and 25B located on the frame of the tractor behind the wheel 12 for connection to supply hoses 25C drive fluid to the header at a manifold 25D.

At the driven end 11A of the frame is provided a cab 30 which sits over the driven end between the driven wheels 12 and 13 so the operator can look over the header during the operating action on the field. The cab 30 encloses an operator console generally indicated at 31 which includes a seat 32, a steering control 33 in the form of a conventional steering wheel, a speed control 34 and an accessory control 35. The steering wheel 33 is of a conventional nature and is mounted in the console in front of the seat by suitable mounting arrangements which allow the operator to enter the seat and be comfortably located on the seat behind the steering wheel. To the right hand of the operator is provided a speed control 34 generally in the form of a lever which can pivot forwardly and rearwardly between a reverse position at the rear, a neutral position at the center and a forward position at the front. In an intuitive manner, therefore, the operator can pull rearwardly on the lever for reverse and push forwardly on the lever for forward movement with the rate of the movement being controlled by the relative position of the lever along its sliding action. In addition there is provided a switch 34A which can be operated to select speed ranges for the driving speed of the vehicle.

To the right hand of the operator, on the same lever as the speed control for convenient access to the operator's hand, is provided the accessory control 35 which includes a series of switches and levers for operating the position and operating parameters of the header attached to the tractor. The switches include a header height and angle control by way of a four way (two axis) switch a reel height and forward location control by way of a four way (two axis) switch and a reel speed control two way one axis switch so that the skilled operator can control the parameters of the header during the working action. The header is engaged by a main drive control lever in many cases also be reversed in the event of a blockage and thus will include a switch for allowing such reversal. Thus the console has in it the ground speed lever (on which the handle houses the header height/angle switches, reel height/fore-aft switches, reel speed control switch and display control switch), engine throttle control, speed range switch, the display module (which includes a variety of switches to control the header) etc.

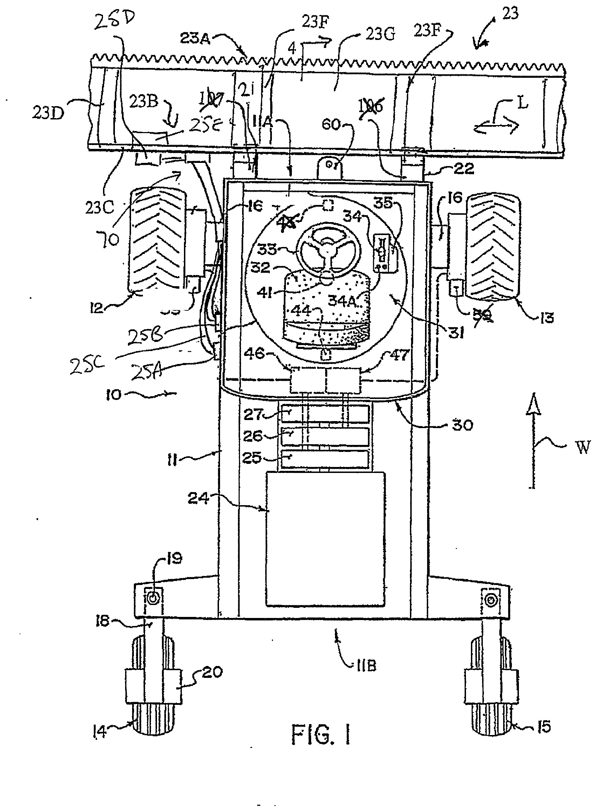

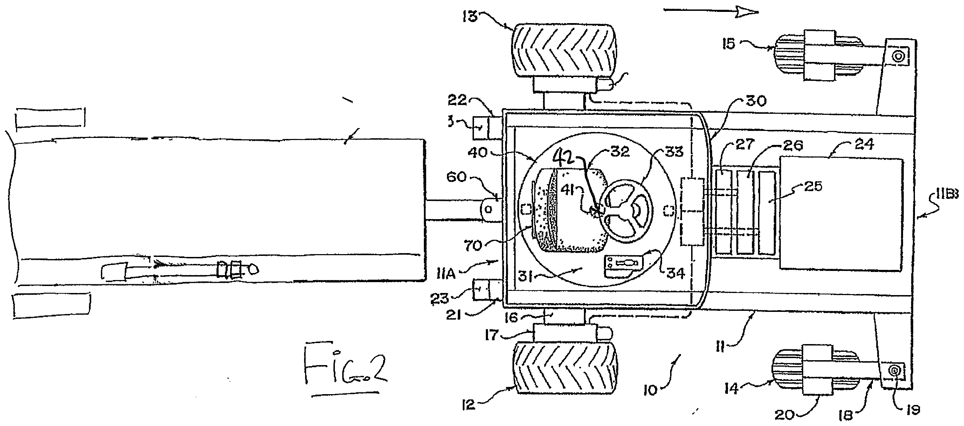

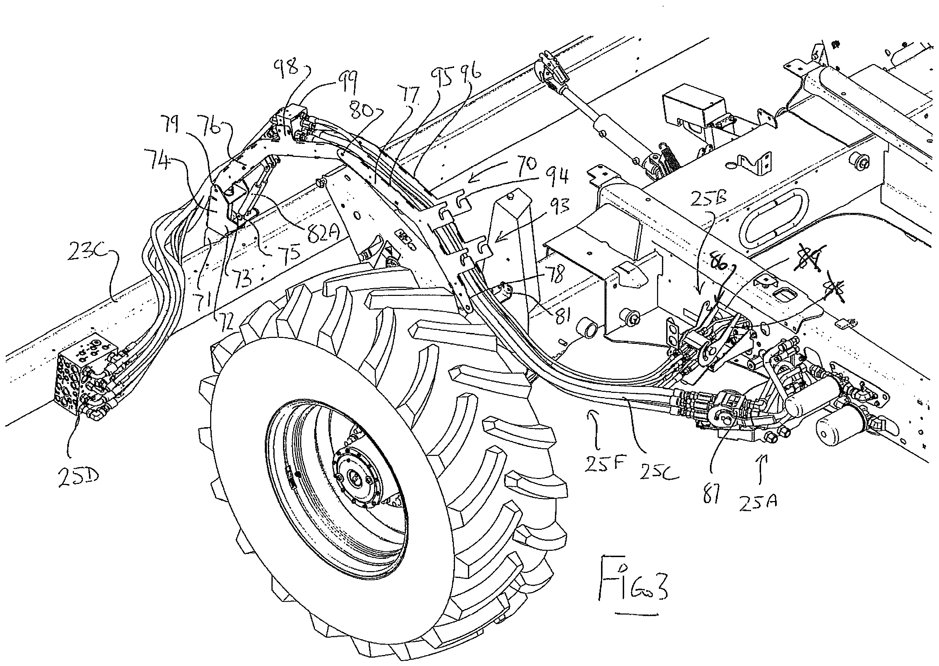

The operator console 31 including the operator seat 32, the steering wheel 33, the speed control 34 and the accessory control 35 are all carried on a platform or base plate 40 carried by the cab on top of the frame 11. The base plate 40 can rotate on a support shaft 41 about a vertical axis 42 between a first position shown in Figure 1 where the seat faces the driven end 11A to the second position shown in Figures 2 and 3 in which the seat faces the engine end 11B. These positions are known herein as "cab forward" in which the cab 30 is located at the forward end of the tractor as it moves with the end 11A at the front and "engine forward" in which the end 11B is at the front and moves forwardly.

In transportation, it is intended therefore that the operator's console is moved to the engine forward position and that the tractor moves forward rapidly at high speed in the transport position at a speed significantly higher than can be achieved in current tractors of this type. When the header is of a relatively narrow width, this header can remain in place and is simply carried behind the tractor. In a situation where the header is of significant width greater than can be accommodated in a road width, the header is disconnected from the supports 21 and 22 and is instead trailed on wheels attached to a hitch 60 at the end 11A of the tractor.

Thus the tractor includes an engine 24 mounted on the tractor frame, at least one hydraulic pump 25, 26, 27 driven by the engine 24 through a transmission for generating a source of hydraulic fluid under pressure for driving components of the tractor and components of the header when attached to the tractor. In particular the hydraulic pumps generate fluid which is controlled by controls 46, 47 to supply fluid under pressure to two driven wheels 12, 13 of the tractor mounted at the first end of the tractor. Speed control and steering control; are provided by the controls 46, 47 in either direction of travel of the tractor. Two non-driven castor wheels 14, 15 of the tractor are mounted at the second end of the tractor. A cab 30 is mounted on the tractor frame at the first end.

There is provided an operator's seat 32 and control assembly 34 arranged for controlling driving movement of the tractor in both a first end forward position and in a second end forward position, the control assembly including a steering control 33 and a speed control 34. Each of the driven wheels 12, 13 includes a respective drive motor 17 driven by hydraulic fluid from the at least one hydraulic pump 25, 26 wherein the speed control 34 is arranged to control a rate of supply of hydraulic fluid from the at least one hydraulic pump to the respective drive motor to control a common speed of rotation of the driven wheels and thus a speed of movement of the tractor. The steering control 33 is arranged to control a differential in rate of supply of hydraulic fluid from the hydraulic pump to the respective drive motor 17 to control a relative speed of rotation of the driven wheels 12, 13 and thus a turning direction of the tractor.

The header 23 includes an elongate header frame 23B defined by a main beam 23C and forwardly extending legs 23D which carry a cutter bar 23A. The cutter extends longitudinally along the front cutter bar of the header frame for cutting the crop when the header is moved in a working direction W generally at a right angle to its longitudinal direction L. Different types of cutter can be used but the typical example comprises a sickle knife. A crop transport system 23F, generally drapers but other systems can be used, is provided for transporting the crop longitudinally of the header to a central discharge opening 23G of the header so as to form a swath to be deposited on the ground between the wheels 12, 13 of the tractor.

The mounting assembly carrying the header at the forward position at the first end of the tractor supports the header in movement over the ground as the tractor is moved in the working direction. The mounting assembly 21, 22 mounts the header on the tractor for movements of the header relative to the tractor in corrections both upwardly and downwardly and in twisting movement where one end of the header is moved upwardly and downwardly relative to the other end and vice versa. The header can also tilt forwardly and rearwardly on the support arms 21, 22 by a tilting movement actuated typically by a centre actuation cylinder (not shown). Such movements are typically floating movements in that the mounting assembly 21, 22 includes springs or float action so that the header can move upwardly and downwardly and can twist depending upon ground contour. However in some cases control the movement of the header can also be provided. In some cases the header floats with the cutter bar on the ground and the cases are gauge wheels are provided, depending upon crop requirements.

The mounting assembly 21, 22 is also releasable for disconnection of the header from the tractor so that the header can be located in the trailed position relative to the tractor to be towed by the tractor on ground wheels provided on the header attached to the header. However the present invention does not require that the header be moved to a transport position since the header can simply be disconnected for storage or can be transported on a conventional trailer by the tractor depositing the header on to the trailer before disconnection. In all cases it is required that the header be disconnected from the tractor at the mounting assembly 21, 22.

As previously described the pump 25 communicates fluid to manifolds at 25A, 25B for communication of fluid to the hydraulic drive system 25E of the header through the hoses 25C and the manifold 25D. The hoses thus provide a flexible conduit assembly having at least one hose and typically a series of hoses having an extent from the tractor for connecting the pressurised fluid from the tractor to the hydraulic drive system.

The arrangement of the present invention provides a conduit support member 70 for supporting the hoses or conduits of the conduit assembly in at least part of their extent from the tractor to the header.

The conduit support member 70 is shown best in figure 3 and comprises a base member 71 mounted on the main support beam 23C of the header at a fixed position which is maintained attached to the header at all times. On top of the base member 70 is mounted a swivel member 72 which can rotate about a vertical swivel pin 73 so as to provide a clevis 74 at the top of the swivel member 72 and so as to provide a base 75 of the swivel member 72. The clevis 74 can therefore rotate about the vertical axis of the pin 73 so as to allow the arm to rotate about the axis of the pin.

The further includes a first portion 76 and a second portion 77 which together generally form an arch extending from the clevis 74 to an outer end of the second portion 77 at the end 78. The first portion 76 is pivotally mounted on the clevis at a pivot pin 79 generally orthogonal or right angles to the pin 73 little movement of the first portion about a generally horizontal axis. The second portion 77 is pivotally mounted on the outer end of the first portion at a second pin 80 parallel to the first pin 79 so that the first portion can move upwardly and downwardly and the second portion can also pivot upwardly and downwardly relative to the outer end of the first portion.

The conduit support member 70 is therefore connected at one end to the header and is connected at the other end to a releasable coupling 81 at the end 78 of the second portion. The conduit support member 70 includes the articulation components provided by the pin 73 and the pivot pins 79 and 80 which allow articulation of the end 78 relative to the fixed end 71 so as to accommodate the movements of the header relative to the tractor.

The conduit support member 70 further includes support components 82A and 83A providing support to the conduit assembly 25C to prevent collapse of the conduit assembly when the conflicts are disconnected from the manifolds 25A and 25B, that is when the end 78 is disconnected from the coupling 81.

The coupling 81 includes a ball joint which allows the end 78 to swivel in all directions relative to the fixed point on the tractor. The coupling 81 is outside surface of the wheel strut 16 of the tractor which is a suitable position relative to the main beam of the header and relative to the manifolds at 25A, 25B. The end 78 of the arm carries a depending rod 82 which carries the ball of the ball and socket coupling providing the connection between the end 78 and the bracket 81. The ball and socket coupling can be disconnected only suitable location to separate the end 78 from the bracket 81.

The end 78 is separated from the manifolds 25A and 25B by a free floating portion 25F of the conduits which are disconnected using conventional connection systems from the manifolds. Each of the manifold couplings 86 and 87 can be moved to a respective bracket 92, 93 on the second portion 77 of the support arm. Each of the brackets comprises a pair of upstanding lugs with a slot 94 for receiving the transverse bar which is draped over the slot slide into the slot to hold and support the in the couplings 86 and 87 after their disconnection. In this way the operator when disconnecting the header can firstly separate the connectors 86 and 87 and can move them to the draped position at the brackets 92, 93. The heavy hoses are therefore firstly supported wholly by the arm 70 including the portion attached to the arm and the free end portion 25F.

The conduit support 70 or arm includes a flat base 97 and two upstanding sides 95, 96 forming a channel having a width sufficient to receive the series of hoses. The bracket 92 and 93 form extensions the sidewalls extending upwardly from the top of the sidewalls. A further bracket 98 is located on the first portion 76 so as to carry a relief valve 99 that is provided for windrowers in the knife circuit.

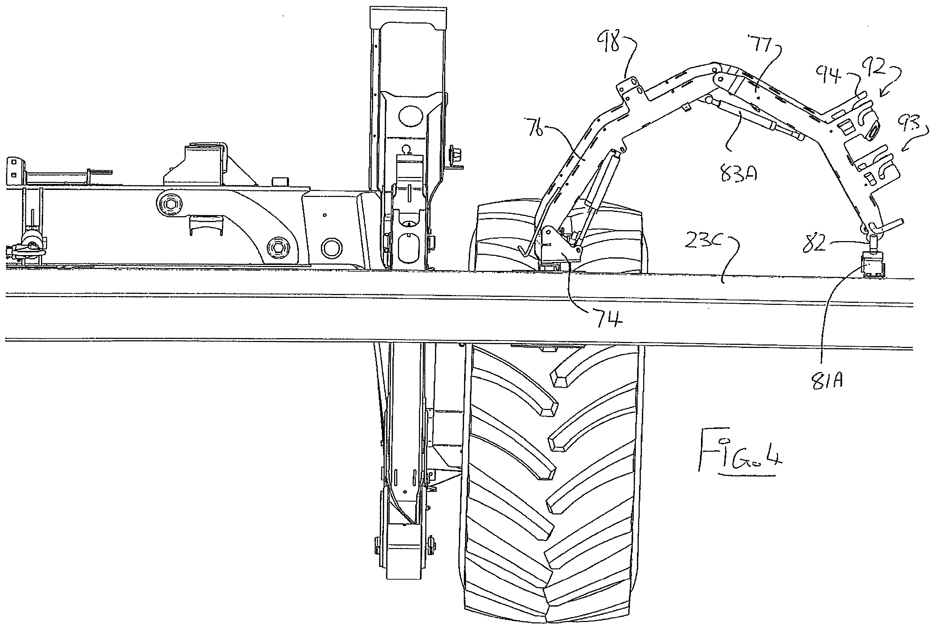

The support components 82A and 83A, each comprise a pair of gas springs which provide a resistance to collapse. That is the gas springs can be expanded and collapsed by pressure from the operator but tend to hold the first portion 76 at a fixed position to the bracket and to hold the second portion 77 at a fixed position relative to the first portion 76. In this way when the coupling 81 is disconnected after the hoses are hung on the brackets 92 and 93, the conduit support member or arm remains in supported position against collapse. The operator is required to manually support the hoses when disconnected since they remain supported by the arm. The operator can then twist the arm about the vertical pivot pin 73 to the position shown in figure 4 where the end 78 of the arm is located on a bracket 81A identical in construction to the bracket 81. In this position the hoses are maintained correctly supported on the header alone by the connection at one end by the base 71 to the main and at the other end other end to the bracket 81A. The bracket 81A bus forms a releasable coupling on the header for receiving and locating the other end of the conduit support member 70 when disconnected from the tractor.

When the hoses are disconnected from the tractor, the header can be disconnected from the tractor using conventional systems. The header can be moved to transport position or can be deposited on the ground for storage. In some cases the header can be placed onto a trailer. It will be understood that these arrangements are not part of the present invention where the present arrangement is provided for management of the heavy hoses to allow the operator to manage the disconnection of the header from the tractor with a low level of manual labour involved in the disconnection procedure.

## Claims

1. A crop harvesting machine comprising:
a tractor (10) having longitudinally opposed first and second ends (11A, 11B);
a driver cabin (30) on the tractor;
ground wheels (12, 13, 14, 15) rotatably supported on the tractor for movement of the tractor in a working direction (W)
across the ground which carries a crop to
be harvested;
an engine (24) and hydraulic pump (25) mounted on the tractor for providing a pressurized fluid output;
a header (23) having an elongate support structure (23B) arranged across a width of the tractor extending from one end of the header to an opposed end of the header;
the header including a cutter system (23A) extending across a width of the header for cutting a standing crop as the header is moved over the ground;
the header including a hydraulic header drive system (25E) for driving at least the cutter system (23A);
a mounting assembly (21,22) carrying the header at a position forward of the first end of the tractor so as to support the header in movement over the ground as the tractor is moved in the working direction;
the mounting assembly (21,22) mounting the header on the tractor for movements of the header relative to the tractor at least in a first direction upwardly and downwardly and in a second direction of twisting movement where said one end of the header is movable upwardly and downward relative to said opposed end;
the mounting assembly (21,22) being releasable for disconnection of the header from the tractor;
a flexible conduit assembly (25C) having one or more conduits having an extent from the tractor to the header for connecting the pressurized fluid from the tractor (10) to the hydraulic header drive system (25E);
**characterized in that there is provided** a conduit support member (70) for supporting the conduit assembly (25C) in at least part of the extent from the tractor (10) to the header (23);
wherein the conduit support member (70) is connected at one end to one of the tractor and the header and being connected by a releasable coupling (81) at the other end to the other of the tractor and the header;
the conduit support member (70) including articulation components (73, 79, 80) providing articulation of said one end relative to the other end so as to accommodate said movements of the header relative to the tractor;
the conduit support member (70) including support components (82A, 83A) providing support to the conduit assembly (25C) to prevent collapse thereof when said other end is disconnected from said other of the tractor and the header for disconnection of the header.

2. The crop harvesting machine according to claim 1 wherein the conduit assembly (70) includes a manifold (25A) for disconnection of ends of a plurality of conduits of said conduit assembly.

3. The crop harvesting machine according to claim 2 wherein an end of the conduits at the manifold (25A) includes at least one hand graspable handle member for manual lifting of the ends from the manifold and wherein the conduit support member includes at least one bracket (92, 93) for receiving and supporting said at least one hand graspable handle member.

4. The crop harvesting machine according to claim 2 wherein the conduit assembly (25C) includes a portion of said plurality of conduits extending freely beyond said releasable coupling.

5. The crop harvesting machine according to claim 4 wherein the conduit support member includes at least one bracket (92, 93) for supporting the ends of said plurality of conduits when disconnected.

6. The crop harvesting machine according to claim 5 wherein the manifold (25A) includes a plurality of components and there are provided a plurality of separate brackets (92, 93) at spaced positons on the conduit support member each for a receiving a respective one of the components.

7. The crop harvesting machine according to claim 6 wherein each of the components includes a hand graspable handle member and wherein each of the brackets (92, 93) is arranged to receive the hand graspable handle member.

8. The crop harvesting machine according to claim 7 wherein the handle member comprises a transverse bar and wherein the bracket (92, 93) defines a slot (94) into which the bar engages.

9. The crop harvesting machine according to any one of claims 1 to 8 wherein the releasable coupling (81) comprises a ball joint.

10. The crop harvesting machine according to any one of claims 1 to 9 wherein the articulation components (73, 79, 80) provides a mounting base, a first portion (76) of the conduit support member extending from the mounting base and pivotal relative thereto about a first transverse axis and a second portion (77) connected at a distal end of the first portion and pivotal relative thereto about an axis parallel to the first axis.

11. The crop harvesting machine according to any one of claims 1 to 10 wherein the conduit support member comprises a channel (95, 96) within which said one or more conduit/s sit.

12. The crop harvesting machine according to any one of claims 1 to11 wherein the conduit support member (70) is arched.

13. The crop harvesting machine according to any one of claims 1 to 12 wherein the conduit support member (70) is connected between main beam (23C) of the header and a front wheel support strut (16) of the tractor.

14. The crop harvesting machine according to any one of claims 1 to 13 wherein the conduit support member (70) is permanently connected at said one end to the header (23) and wherein there is provided a releasable coupling (81A) on the header (23) for receiving and locating the other end of the conduit support member (70) when disconnected from the tractor (10).

## Patentansprüche

1. Getreideerntemaschine, umfassend:
einen Traktor (10), der sich längs gegenüberliegende erste und zweite Enden (11A, 11B) aufweist;
eine Fahrerkabine (30) auf dem Traktor;
Bodenräder (12, 13, 14, 15), die drehbar an dem Traktor gelagert sind, zur Bewegung des Traktors in einer Arbeitsrichtung (W) über den Boden, der ein zu erntendes Getreide trägt;
einen Motor (24) und eine hydraulische Pumpe (25), die an dem Traktor befestigt sind, zur Bereitstellung einer Druckfluidabgabe;
einen Vorsatz (23), der eine längliche Stützstruktur (23B) aufweist, die über eine Breite des Traktors angeordnet ist, die sich von einem Ende des Vorsatzes zu einem gegenüberliegenden Ende des Vorsatzes erstreckt;
wobei der Vorsatz ein Schneidsystem (23A) umfasst, das sich über eine Breite des Vorsatzes erstreckt, zum Schneiden eines stehenden Getreides, während der Vorsatz über den Boden bewegt wird;
wobei der Vorsatz ein hydraulisches Vorsatzantriebssystem (25E) für den Antrieb zumindest des Schneidsystems (23A) umfasst;
eine Befestigungsanordnung (21, 22), die den Vorsatz an einer Position vor dem ersten Ende des Traktors trägt, um den Vorsatz in Bewegung über den Boden zu stützen, während der Traktor in der Arbeitsrichtung bewegt wird;
wobei die Befestigungsanordnung (21, 22) den Vorsatz für Bewegungen des Vorsatzes relativ zum Traktor mindestens in einer ersten Richtung aufwärts und
abwärts und in einer zweiten Richtung einer Torsionsbewegung, bei der das eine Ende des Vorsatzes aufwärts und abwärts relativ zu dem gegenüberliegenden Ende beweglich ist, an dem Traktor befestigt;
wobei die Befestigungsanordnung (21, 22) zur Trennung des Vorsatzes von dem Traktor lösbar ist;
eine flexible Leitungsanordnung (25C), die eine oder mehrere Leitungen aufweist, die eine Ausdehnung von dem Traktor zu dem Vorsatz aufweisen, zum Verbinden des Druckfluids von dem Traktor (10) zu dem hydraulischen Vorsatzantriebssystem (25E);
**dadurch gekennzeichnet, dass** ein Leitungsstützelement (70) zum Stützen der Leitungsanordnung (25C) mindestens in einem Teil der Ausdehnung von dem Traktor (10) zu dem Vorsatz (23) vorgesehen ist;
wobei das Leitungsstützelement (70) an einem Ende mit dem Traktor und an dem anderen Ende durch eine lösbare Kopplung (81) mit dem Vorsatze verbunden ist oder an einem Ende mit dem Vorsatz und an dem anderen Ende durch eine lösbare Kopplung (81) mit dem Traktor verbunden ist;
wobei das Leitungsstützelement (70) Gelenkkomponenten (73, 79, 80) umfasst,
die eine Anlenkung des einen Endes relativ zu dem anderen Ende bereitstellen,
um die Bewegungen des Vorsatzes relativ zu dem Traktor zu ermöglichen;
wobei das Leitungsstützelement (70) Stützkomponenten (82A, 83A) umfasst,
die die Leitungsanordnung (25C) stützen, um einen Fall derselben zu verhindern, wenn zum Trennen des Vorsatzes das andere Ende des Leitungsstützelements (70) von dem Traktor beziehungsweise dem Vorsatz getrennt ist.

2. Getreideerntemaschine nach Anspruch 1, wobei die Leitungsanordnung (70) einen Verteiler (25A) zur Trennung von Enden einer Vielzahl von Leitungen der Leitungsanordnung umfasst.

3. Getreideerntemaschine nach Anspruch 2, wobei ein Ende der Leitungen an dem Verteiler (25A) mindestens ein von Hand greifbares Griffelement zum manuellen Abheben der Enden von dem Verteiler umfasst, und wobei das Leitungsstützelement mindestens eine Halterung (92, 93) zur Aufnahme und zum Stützen des mindestens einen von Hand greifbaren Griffelements umfasst.

4. Getreideerntemaschine nach Anspruch 2, wobei die Leitungsanordnung (25C) einen Abschnitt der Vielzahl von Leitungen umfasst, der sich frei über die lösbare Kopplung hinaus erstreckt.

5. Getreideerntemaschine nach Anspruch 4, wobei das Leitungsstützelement mindestens eine Halterung (92, 93) zum Stützen der Enden der Vielzahl von Leitungen, wenn diese getrennt sind, umfasst.

6. Getreideerntemaschine nach Anspruch 5, wobei der Verteiler (25A) eine Vielzahl von Komponenten umfasst und eine Vielzahl von separaten Halterungen (92, 93) an beabstandeten Positionen an dem Leitungsstützelement jeweils für eine Aufnahme einer jeweiligen der Komponenten vorgesehen sind.

7. Getreideerntemaschine nach Anspruch 6, wobei jede der Komponenten ein von Hand greifbares Griffelement umfasst und wobei jede der Halterungen (92, 93) derart eingerichtet ist, dass sie das von Hand greifbare Griffelement aufnimmt.

8. Getreideerntemaschine nach Anspruch 7, wobei das Griffelement einen Querbalken umfasst und wobei die Halterung (92, 93) einen Schlitz (94) definiert, in den der Balken eingreift.

9. Getreideerntemaschine nach einem der Ansprüche 1 bis 8, wobei die lösbare Kopplung (81) ein Kugelgelenk umfasst.

10. Getreideerntemaschine nach einem der Ansprüche 1 bis 9, wobei die Gelenkkomponenten (73, 79, 80) eine Befestigungsbasis bereitstellen, wobei ein erster Abschnitt (76) des Leitungsstützelements sich von der Befestigungsbasis und relativ dazu um eine erste Querachse schwenkbar erstreckt und ein zweiter Abschnitt (77) an einem distalen Ende des ersten Abschnitts verbunden ist und relativ dazu um eine Achse parallel zu der ersten Achse schwenkbar ist.

11. Getreideerntemaschine nach einem der Ansprüche 1 bis 10, wobei das Leitungsstützelement einen Kanal (95, 96) umfasst, in dem die eine oder mehreren Leitungen liegen.

12. Getreideerntemaschine nach einem der Ansprüche 1 bis 11, wobei das Leitungsstützelement (70) gewölbt ist.

13. Getreideerntemaschine nach einem der Ansprüche 1 bis 12, wobei das Leitungsstützelement (70) zwischen dem Hauptträger (23C) des Vorsatzes und einer Vorderradstützstrebe (16) des Traktors verbunden ist.

14. Getreideerntemaschine nach einem der Ansprüche 1 bis 13, wobei das Leitungsstützelement (70) an dem einen Ende dauerhaft mit dem Vorsatz (23) verbunden ist, und wobei an dem Vorsatz (23) eine lösbare Kopplung (81A) zur Aufnahme und zum Anordnen des anderen Endes des Leitungsstützelements (70), wenn es von dem Traktor (10) getrennt ist, vorgesehen ist.

## Revendications

1. Machine de récoltes comprenant :
un tracteur (10) ayant des première et seconde extrémités opposées longitudinalement (11A, 11B) ;
une cabine de conducteur (30) sur le tracteur ;
des roues terrestres (12, 13, 14, 15) supportées en rotation sur le tracteur pour un mouvement du tracteur dans une direction de travail (W) sur le sol qui supporte une récolte devant être récoltée ;
un moteur (24) et une pompe hydraulique (25) montée sur le tracteur pour fournir une sortie de fluide sous pression ;
une table de coupe (23) ayant une structure de support allongée (23B) agencée sur une largeur du tracteur s'étendant d'une extrémité de la table de coupe à une extrémité opposée de la table de coupe ;
la table de coupe incluant un système de coupe (23A) s'étendant sur une largeur de la table de coupe pour couper une récolte verticale lorsque la table de coupe est déplacée sur le sol ;
la table de coupe incluant un système d'entraînement de table de coupe hydraulique (25E) pour entraîner au moins le système de coupe (23A) ;
un ensemble de montage (21, 22) supportant la table de coupe au niveau d'une position à l'avant de la première extrémité du tracteur de manière à supporter la table de coupe en mouvement sur le sol lorsque le tracteur est déplacé dans la direction de travail ;
l'ensemble de montage (21, 22) montant la table de coupe sur le tracteur pour des mouvements de la table de coupe par rapport au tracteur au moins dans une première direction vers le haut et vers le bas et dans une seconde direction de mouvement de torsion où ladite une extrémité de la table de coupe est mobile vers le haut et vers le bas par rapport à ladite extrémité opposée ;
l'ensemble de montage (21, 22) étant amovible pour une déconnexion de la table de coupe par rapport au tracteur ;
un ensemble de conduites flexible (25C) ayant une ou plusieurs conduites ayant une extension du tracteur vers la table de coupe pour connecter le fluide sous pression du tracteur (10) au système d'entraînement de table de coupe hydraulique (25E) ;
**caractérisée en ce qu'**un élément de support de conduites (70) est fourni pour supporter l'ensemble de conduites (25C) dans au moins une partie de l'extension du tracteur (10) vers la table de coupe (23) ;
dans laquelle l'élément de support de conduites (70) est connecté au niveau d'une extrémité à l'un du tracteur et de la table de coupe et connecté par un couplage amovible (81) au niveau de l'autre extrémité à l'autre du tracteur et de la table de coupe ;
l'élément de support de conduites (70) incluant des composants d'articulation (73, 79, 80) fournissant une articulation de ladite une extrémité par rapport à l'autre extrémité de manière à permettre lesdits mouvements de la table de coupe par rapport au tracteur ;
l'élément de support de conduites (70) incluant des composants de support (82A, 83A) fournissant un support à l'ensemble de conduites (25C) pour empêcher l'effondrement de celui-ci lorsque ladite autre extrémité est déconnectée dudit autre du tracteur et de la table de coupe pour une déconnexion de la table de coupe.

2. Machine de récoltes selon la revendication 1 dans laquelle l'ensemble de conduites (70) inclut un collecteur (25A) pour une déconnexion d'extrémités d'une pluralité de conduites dudit ensemble de conduites.

3. Machine de récoltes selon la revendication 2 dans laquelle une extrémité des conduites au niveau du collecteur (25A) inclut au moins un élément de poignée pouvant être saisi à la main pour un levage manuel des extrémités à partir du collecteur et dans laquelle l'élément de support de conduites inclut au moins un support (92, 93) pour recevoir et supporter ledit au moins un élément de poignée pouvant être saisi à la main.

4. Machine de récoltes selon la revendication 2 dans laquelle l'ensemble de conduites (25C) inclut une portion de ladite pluralité de conduites s'étendant librement au-delà dudit couplage amovible.

5. Machine de récoltes selon la revendication 4 dans laquelle l'élément de support de conduites inclut au moins un support (92, 93) pour supporter les extrémités de ladite pluralité de conduites après déconnexion.

6. Machine de récoltes selon la revendication 5 dans laquelle le collecteur (25A) inclut une pluralité de composants, et une pluralité de supports séparés (92, 93) est fournie au niveau de positions espacées sur l'élément de support de conduites pour recevoir un composant respectif des composants.

7. Machine de récoltes selon la revendication 6 dans laquelle chacun des composants inclut un élément de poignée pouvant être saisi à la main et dans laquelle chacun des supports (92, 93) est agencé pour recevoir l'élément de poignée pouvant être saisi à la main.

8. Machine de récoltes selon la revendication 7 dans laquelle l'élément de poignée comprend une barre transversale et dans laquelle le support (92, 93) définit une fente (94) dans laquelle la barre vient en prise.

9. Machine de récoltes selon l'une quelconque des revendications 1 à 8 dans laquelle le couplage amovible (81) comprend un joint à rotule.

10. Machine de récoltes selon l'une quelconque des revendications 1 à 9 dans laquelle les composants d'articulation (73, 79, 80) fournissent une base de montage, une première portion (76) de l'élément de support de conduites s'étendant à partir de la base de montage et pivotante par rapport à celle-ci autour d'un premier axe transversal et une seconde portion (77) connectée au niveau d'une extrémité distale de la première portion et pivotante par rapport à celle-ci autour d'un axe parallèle au premier axe.

11. Machine de récoltes selon l'une quelconque des revendications 1 à 10 dans laquelle l'élément de support de conduites comprend un canal (95, 96) à l'intérieur duquel ladite/lesdites une ou plusieurs conduite(s) est/sont supportée(s).

12. Machine de récoltes selon l'une quelconque des revendications 1 à 11 dans laquelle l'élément de support de conduites (70) est arqué.

13. Machine de récoltes selon l'une quelconque des revendications 1 à 12 dans laquelle l'élément de support de conduites (70) est connecté entre la poutre principale (23C) de la table de coupe et un montant de support de roue avant (16) du tracteur.

14. Machine de récoltes selon l'une quelconque des revendications 1 à 13 dans laquelle l'élément de support de conduites (70) est connecté de façon permanente au niveau de ladite une extrémité à la table de coupe (23) et dans laquelle un couplage amovible (81A) est fourni sur la table de coupe (23) pour recevoir et placer l'autre extrémité de l'élément de support de conduites (70) après déconnexion du tracteur (10).
